# EUROPÄISCHE PATENTANMELDUNG

(11) **EP 4 733 097 A1**
(43) Veröffentlichungstag der Anmeldung: **29.04.2026**
(21) Anmeldenummer: 25209578.1
(22) Anmeldetag: 17.10.2025
(51) Int. Cl.: B60J 1/17, B60J 5/04

(54) **VORRICHTUNG ZUM ERLEICHTERN EINES EINFÜHRENS EINER SCHEIBE**

(30) Priorität: 22.10.2024 DE 102024130761
(71) Anmelder: MAN Truck & Bus SE, 80995 München (DE)
(72) Erfinder: Schmidt, Alexander, 80995 München (DE)

(57) **Zusammenfassung**

Die vorliegende Offenbarung betrifft eine Vorrichtung zum Erleichtern eines Einführens einer, insbesondere absenkbaren, Scheibe in ein Sichtfenster, insbesondere ein Tiefsichtfenster, eines Fahrzeugs, insbesondere eines Nutzfahrzeugs, oder in einen Rahmen des Sichtfensters, umfassend: wenigstens eine Eingriffsstruktur, insbesondere wenigstens eine Finne, die ausgebildet ist, bei einer Bewegung der, insbesondere absenkbaren, Scheibe, insbesondere bei einem Absenken und/oder Hochfahren der Scheibe, in einen Dichtbereich des Sichtfensters oder des Rahmens einzugreifen.

## Beschreibung

Die vorliegende Offenbarung bezieht sich auf eine Vorrichtung zum Erleichtern eines Einführens einer, insbesondere absenkbaren, Scheibe in ein Sichtfenster, insbesondere ein Tiefsichtfenster, eines Fahrzeugs, insbesondere eines Nutzfahrzeugs oder zum Erleichtern eines Einführens der, insbesondere absenkbaren, Scheibe in einen Rahmen des Sichtfenster, insbesondere des Tiefsichtfensters, des Fahrzeugs, insbesondere des Nutzfahrzeugs.

Auf dem Gebiet der Fahrzeugfenster ist es üblich, zuverlässige bzw. robuste Abdichtungen gegen Witterungseinflüsse bereitzustellen. Dabei spielt die Gestaltung und/oder Funktionalität von Sichtfenstern eine wichtige Rolle für die Sicherheit und/oder den Komfort. Es ist üblich, dass Fahrzeuge mit Sichtfenstern ausgestattet sind, die eine klare Sicht nach außen ermöglichen und gleichzeitig den Innenraum vor äußeren Einflüssen schützen. Bekannte Systeme umfassen typischerweise Scheiben, die in einem Rahmen, z.B. bei Tiefsichtfenstern, eingefasst sind. Bei absenkbaren Scheiben, wie Seitenscheiben, von Nutzfahrzeugen ist die Integration eines effektiven Dichtsystems von entscheidender Bedeutung, um z.B. den Innenraum vor Wasser/Feuchtigkeit, Verunreinigungen wie z.B. Staub und/oder anderen Umwelteinflüssen zu schützen.

Bekannte Systeme umfassen typischerweise mechanische Führungen und/oder Dichtungen, die die Scheibe in ihrer Bewegung unterstützen und gleichzeitig eine Abdichtung sicherstellen. Diese Systeme sind oft komplex und erfordern präzise Fertigung und Montage, um eine einwandfreie Funktion zu gewährleisten. Insbesondere bei Nutzfahrzeugen, die häufig unter rauen Bedingungen betrieben werden, ist die Zuverlässigkeit und Langlebigkeit dieser Systeme wichtig.

Gemäß bekannter Technik werden verschiedene Ansätze verfolgt, um die Abdichtung und Führung von absenkbaren Scheiben zu verbessern. Dazu gehören unter anderem mechanische Führungen der Scheibe, die die Bewegung der Scheibe stabilisieren. Trotz dieser Fortschritte gibt es nach wie vor Herausforderungen, insbesondere in Bezug auf die Belastung, die Reibung und/oder den Verschleiß der Dichtungen sowie die Komplexität der mechanischen Komponenten. Diese Probleme können zu einer verminderten Lebensdauer der Systeme und zu erhöhtem Wartungsaufwand führen.

Ein weiteres Problem besteht darin, dass die Dichtkanäle, in die die Scheiben eingeführt werden, oft eng, robust, unflexibel und/oder schwer zugänglich sind. Dies kann die Montage und/oder Wartung der Scheiben erschweren und zu Beschädigungen der Dichtungen führen. Zudem kann es bei der Bewegung der Scheiben zu einem erhöhten Widerstand kommen, was die Bedienbarkeit beeinträchtigt und den Verschleiß der Komponenten erhöht. Bekannte Lösungen sind oft nicht ausreichend effektiv oder erfordern zusätzliche Bauteile, die das System weiter verkomplizieren.

Trotz der beträchtlichen Fortschritte auf dem Gebiet der Fahrzeugfenster und der Führung absenkbarer Scheiben besteht nach wie vor ein Bedarf an verbesserten Systemen, die eine zuverlässige Abdichtung und Führung gewährleisten, gleichzeitig aber einfacher zu montieren und zu warten sind. Insbesondere besteht ein Bedarf an Lösungen, die den Verschleiß der Dichtungen minimieren und die Bedienbarkeit der Scheiben verbessern, ohne die Komplexität der Systeme unnötig zu erhöhen.

Es ist ein Ziel der vorliegenden Erfindung, eine Vorrichtung bereitzustellen, die einen oder mehrere Nachteile bekannter Systeme zumindest teilweise überwindet.

Die Aufgabe wird durch die Merkmale der unabhängigen Ansprüche gelöst. Die abhängigen Patentansprüche beschreiben bevorzugte Ausführungsformen. Weitere Aspekte, Vorteile und Merkmale ergeben sich aus den abhängigen Ansprüchen, der Beschreibung und den begleitenden Zeichnungen.

Die Erfindung betrifft eine Vorrichtung zum Erleichtern eines Einführens einer, insbesondere absenkbaren, Scheibe in ein Sichtfenster, insbesondere ein Tiefsichtfenster, eines Fahrzeugs, insbesondere eines Nutzfahrzeugs, oder in einen Rahmen des Sichtfensters, umfassend:
wenigstens eine Eingriffsstruktur, insbesondere wenigstens eine Finne, die ausgebildet ist, bei einer Bewegung der, insbesondere absenkbaren, Scheibe, insbesondere bei einem Absenken und/oder Hochfahren der Scheibe, in einen Dichtbereich des Sichtfensters oder des Rahmens einzugreifen.

Die Erfindung betrifft ein Fenstersystem für ein Fahrzeug, insbesondere ein Nutzfahrzeug, umfassend:
eine Vorrichtung nach einem oder mehreren der hierin beschriebenen Ausführungsbeispiele und/oder Aspekte, und
wenigstens eine, insbesondere absenkbare, Scheibe für ein Sichtfenster, insbesondere ein Tiefsichtfenster, des Fahrzeugs oder für einen Rahmen desselben, wobei die Vorrichtung an der Scheibe oder einem Scheibenhalter befestigbar und/oder befestigt ist.

Die Erfindung betrifft ein Fahrzeug, insbesondere ein Nutzfahrzeug, das mit einer Vorrichtung nach einem oder mehreren Ausführungsbeispielen und/oder Aspekten und/oder einem Fenstersystem nach einem oder mehreren Ausführungsbeispielen und/oder Aspekten ausgestattet ist.

Ein Rahmen kann als Vorrichtung, System, Einrichtung, (Bau-)Teil und/oder Element verstanden werden und/oder eingerichtet sein zur Aufnahme einer Scheibe, insbesondere einer absenkbaren Scheibe, z.B. aus einem Glasmaterial und/oder zur Befestigung in einem anderen System, z.B. einem Fahrzeug, insbesondere einem Nutzfahrzeug, vorzugsweise einem Fahrerhaus eines Lastkraftwagens (LKW), beispielsweise einer Tür, wie einer Fahrertür und/oder Beifahrertür desselben. Der Rahmen kann, z.B. durch die, insbesondere absenkbare, Scheibe bzw. Fensterscheibe (oder Kurbelscheibe), z.B. aus Glas, eine Trennung, Barriere und/oder Grenze zwischen einem Innenraum bzw. einem Innenbereich, z.B. einem Inneren der Fahrerkabine und einem Außenraum bzw. einem Außenbereich, z.B. der Umgebung, bereitstellen. Der Rahmen kann aus einem Kunststoffmaterial und/oder Blech-Bauteilen hergestellt sein.

Ein Tiefsichtfenster kann ein Fenster, insbesondere ein Sichtfenster, sein, das beispielsweise bei Fahrzeugen, insbesondere Nutzfahrzeugen, wie z.B. ein Lastkraftwagen (LKW) oder dergleichen, tiefer, niedriger und/oder auf geringerer Höhe, z.B. in der Seitenwand bzw. einer Tür und/oder Beifahrertür des Fahrzeugs angeordnet, montiert, und/oder eingebaut ist, um z.B. dem Fahrer und/oder einem oder mehreren der Insassen eine verbesserte und/oder vergrößerte Sicht auf die Umgebung zu ermöglichen. Ein Tiefsichtfenster kann z.B. unterhalb einer Seitenscheibe der Fahrerkabine angeordnet sein. Beispielsweise können ein oder mehrere Tiefsichtfenster bereitgestellt werden. Ein (erstes) Tiefsichtfenster kann sich z.B. an der Fahrertür befinden und/oder ein (zweites) Tiefsichtfenster an der Beifahrertür, der Fahrerkabine, oder umgekehrt. Das eine oder die mehreren Tiefsichtfenster können beispielsweise in der unteren Hälfte der Tür und/oder unterhalb des entsprechenden Seitensichtfensters der Fahrerkabine angeordnet sein. Ein Tiefsichtfenster kann eine oder mehrere, z.B. feste (fest verbaute), unbewegliche, statische bzw. stationäre Scheiben aufweisen, die mit einem Rahmen verbindbar bzw. verbunden sind. Ein Tiefsichtfenster kann optional wenigstens eine, insbesondere wenigstens zwei, feste Scheibe(n) aufweisen, die an dem Rahmen, bzw. jeweils an den beiden (inneren/äußeren) hierin beschriebenen Rahmenelementen anbringbar sind und/oder einander im Wesentlichen gegenüberliegen. Das Tiefsichtfenster kann beispielsweise eine Außenscheibe, also eine Scheibe, welcher der Umgebung zugewandt ist bzw. zuzuwenden ist, aufweisen, welche z.B. aus Glas hergestellt ist und sich im Türaußenblech des Türrohbaus befindet. Das Tiefsichtfenster kann eine optionale Innenscheibe, also eine Scheibe, die dem Innenraum zugewandt ist bzw. zuzuwenden ist, aufweisen, welche aus einem anderen Material, z.B. Polycarbonat, hergestellt ist und sich in der Türverkleidung befindet. Die feste Innenscheibe ist nicht zwingend notwendig, sondern kann als eine Sicherheit z.B. zur Verbesserung der Akustik und/oder zur Abdichtung gegen Störeinflüsse dienen. Alternativ oder zusätzlich kann die feste Innenscheibe ferner zum Schutz beitragen, indem sie verhindern kann, dass jemand in die Öffnung bzw. den Kanal, z.B. des Rahmens, greifen kann, beispielsweise wenn die Scheibe abgesenkt wird. Die absenkbare Scheibe bzw. die Kurbelscheibe kann sich z.B. zwischen den wenigstens zwei festen Scheiben des Tiefsichtfensters bewegen (oder wenigstens zwischen den Rahmenelementen, z.B. wenn nur eine, z.B. feste Außenscheibe, jedoch keine Innenscheibe, verwendet wird) bewegbar, insbesondere absenkbar und/oder hochfahrbar, sein. Die feste(n) Scheibe(n) für das Tiefsichtfenster bzw. den hierin beschriebenen Rahmen können z.B. verklebt werden. Der Rahmen inklusive der festen Scheibe(n) kann beispielsweise durch eine Steck-, Klippverbindung etc. im Türrohbau befestigt werden.

Eine absenkbare Scheibe kann als Fenster-, Kurbel- bzw. Glasscheibe verstanden werden, welche z.B. innerhalb eines Rahmens, bewegbar ist. Die absenkbare Scheibe kann beispielsweise die Scheibe eines Seitenfensters des Fahrzeugs sein, z.B. die Seitenscheibe einer Fahrerkabine eines Lastkraftwagens (LKW), beispielsweise in einer Tür, wie einer Fahrertür und/oder Beifahrertür desselben. Beispielsweise kann die absenkbare Scheibe, z.B. Seitenfensterscheibe, nach unten bewegt werden, insbesondere geöffnet werden (z.B. wenigstens teilweise; Öffnungsstellung). Dies führt dazu, dass die absenkbare Scheibe in eine durch den Rahmen des Tiefsichtfensters gebildete Öffnung wenigstens teilweise eindringt und diese wenigstens teilweise, bzw. je nach Stellung, im Wesentlichen vollständig, blockiert oder verschließt. Die durch den Rahmen des Tiefsichtfensters gebildete Öffnung kann zwischen den wenigstens zwei festen Scheiben des Tiefsichtfensters liegen. Alternativ oder zusätzlich kann die absenkbare Scheibe, z.B. Seitenfensterscheibe, nach oben bewegt werden, insbesondere geschlossen bzw. verschlossen werden (z.B. wenigstens teilweise; Verschlussstellung bzw. Schließstellung). Dies führt dazu, dass die absenkbare Scheibe, die durch den Rahmen des Tiefsichtfensters gebildete Öffnung verlässt bzw. ausfährt und diese wenigstens teilweise, bzw. je nach Stellung, im Wesentlichen vollständig, freigibt. Diese Bewegung(en) ermöglicht/en es den Insassen, beispielsweise die Seitenfenster z.B. nach Bedarf zu öffnen und/oder zu schließen, die Belüftung im Fahrzeug zu kontrollieren, z.B. um die Luftzirkulation zu verbessern und/oder mit der Außenumgebung zu interagieren, ohne dafür die Türen öffnen zu müssen. Derartige Fenster können z.B. mittels einem elektrischen Schalter oder einer Kurbel betätigbar, bewegbar, aktivierbar und/oder verfahrbar sein.

Der Dichtkanal oder Dichtbereich kann ein Bereich, Abschnitt und/oder eine Region sein, der z.B. ausgebildet ist und/oder eingerichtet und/oder ausgelegt ist, eine insbesondere effektive Barriere, Schicht, Grenze, Grenzschicht und/oder Blockade gegen Verunreinigungen wie z.B. Wasser, Luft und/oder Schmutz bereitzustellen, was z.B. unter anspruchsvollen Fahrbedingungen von Bedeutung ist. Der Dichtbereich kann eingerichtet sein, eine insbesondere abdichtende Barriere, insbesondere eine Nass-/Trockenraum-Trennung, für die absenkbare Scheibe bereitzustellen. Der Dichtbereich kann durch einen, insbesondere einteiligen oder zweiteiligen, Rahmen, z.B. mittels wenigstens einem bzw. mehrerer, beispielsweise wenigstens zwei, Dichtmittel, insbesondere Dichtlippen, ausgebildet sein, die vorzugsweise dichtend, aneinander anliegen, insbesondere kraftschlüssig, gegeneinanderdrücken. Der Dichtbereich kann auch als Dichtkanal, Dichtkontur, Dichtungspaket, und/oder Dichtungsschnittstelle bezeichnet werden (diese Begriffe können hierin austauschbar verwendet werden).

Eine Nass-/Trockenraum-Trennung kann eine Trennung zwischen einem Nassraum, z.B. der Umgebung/Außenwelt, und einem Trockenraum, z.B. dem Innenraum der Fahrerkabine bezeichnen. Der Dichtbereich kann beispielsweise so konzipiert sein, dass er eine insbesondere effektive Abdichtung in im Wesentlichen jeder Position und/oder Stellung der insbesondere absenkbaren Scheibe gewährleisten kann. Ferner kann der Dichtbereich sicherstellen, dass die Abdichtung bzw. Trennung auch bei bzw. während einer Bewegung der Scheibe und/oder unter Einfluss von externen Kräften intakt bzw. aufrechterhalten und/oder im Wesentlichen dichtend bleibt. Der Dichtbereich ermöglicht auch eine akustische Verbesserung. Beispielsweise haben die Erfinder überraschenderweise festgestellt, dass die Verwendung eines erfindungsgemäßen Dichtbereichs, zu keiner nennenswerten akustischen Verschlechterung z.B. innerhalb der Fahrerkabine führt. Der Dichtbereich kann eine insbesondere kontinuierliche bzw. dynamische Anpassung des Anpressdrucks an die absenkbare Scheibe bereitstellen, z.B. in Abhängigkeit von einer Position und/oder Stellung der Scheibe.

Hierin wird eine Vorrichtung zum Erleichtern eines Einführens einer, insbesondere absenkbaren, Scheibe in ein Sichtfenster, insbesondere ein Tiefsichtfenster, eines Fahrzeugs, insbesondere eines Nutzfahrzeugs, oder in einen Rahmen des Sichtfensters beschreiben. Diese Vorrichtung kann auch als Einführelement/-einrichtung, Einführvorrichtung und/oder Einführhilfe bezeichnet werden. Diese Vorrichtung kann wenigstens eine Eingriffsstruktur umfassen. Eine Eingriffsstruktur kann ein Element, eine Einheit und/oder eine Struktur bzw. ein technisches Hilfsmittel sein, welche das Einführen der Scheibe erleichtern kann. Die Eingriffsstruktur kann eingerichtet und/oder ausgebildet sein, bei einer Bewegung der, insbesondere absenkbaren, Scheibe, insbesondere bei einem Absenken und/oder Hochfahren der Scheibe, in einen Dichtbereich bzw. Dichtkanal des Sichtfensters oder des Rahmens einzugreifen, einzufahren, einzutauchen und/oder einzuschieben. Beispielsweise kann die Eingriffsstruktur, z.B. als funktionales Element, so gestaltet sein, dass sie in den Dichtbereich eingreift und diesen wenigstens teilweise öffnet bzw. aufweitet, um z.B. einen Widerstand zu reduzieren, der beispielsweise durch die Dichtmittel bzw. Dichtlippen entsteht und/oder Platz für die Scheibe schaffen.

Die Eingriffsstruktur kann wenigstens eine Finne umfassen bzw. als wenigstens eine Finne ausgebildet sein. Die wenigstens eine Finne kann, z.B. durch ihre Form, Abmessungen, (Oberflächen-)Struktur, Material und/oder Positionierung, die Dichtlippen auseinanderdrücken bzw. öffnen, und somit das Einführen, Einschieben, Einstecken und/oder Einlegen der Scheibe erleichtern bzw. ermöglichen. Die wenigstens eine Finne kann in verschiedenen Formen, Geometrien, Verläufe, Konturen, Abschnitte, Abmessungen und/oder Größen gefertigt werden, um unterschiedlichen Dichtungsgeometrien und/oder Einbausituationen gerecht zu werden. Dies erhöht die Flexibilität der Vorrichtung und ermöglicht eine breitere Anwendung in verschiedenen Fahrzeugtypen und -modellen. Die wenigstens eine Eingriffsstruktur bzw. Finne kann eine bestimmte/spezielle, insbesondre reibungsmindernde, Rauigkeit bzw. Beschichtung aufweisen, z.B. um z.B. das Eintauchen zu erleichtern. Die wenigstens eine Finne kann von der Vorrichtung ab-/vorstehen und als Stabilisierung, und/oder Führung dienen, z.B. für die Scheibe. Ein Vorteil der erfindungsgemäßen Vorrichtung bzw. der Eingriffsstruktur/Finne ist eine Reduzierung der Belastung auf die Dichtung, was die Lebensdauer der Dichtungen verlängern kann. Ein weiterer Vorteil ist eine Reduzierung der Kräfte, die auf das Fensterheber-System wirken, was zu einer längeren Lebensdauer und einer besseren Funktionalität des Systems führt.

Die Vorrichtung kann so gestaltet sein, dass die wenigstens eine Eingriffsstruktur, insbesondere die wenigstens eine Finne, separat, individuell und/oder unabhängig zur absenkbaren Scheibe und/oder einem Scheibenhalter ausgebildet bzw. hergestellt ist. Die Finne muss also nicht durch die Scheibe bzw. den Scheibenhalter ausgebildet sein. Diese Konstruktion kann beispielsweise eine flexible und/oder anpassungsfähige Gestaltung der Einführhilfe ermöglichen, da die Finne unabhängig von der Scheibe gefertigt und/oder montiert werden kann. Dies kann insbesondere bedeuten, dass die Finne nicht fest mit der Scheibe verbunden ist, sondern als eigenständiges Bauteil fungiert, das in den Dichtbereich eingreift, um z.B. die Dichtmittle bzw. die Dichtlippen zu öffnen und/oder den Kraftaufwand beim Einführen der Scheibe zu reduzieren. Dabei kann die wenigstens eine Finne z.B. aus einem Material gefertigt werden, das optimal auf die Anforderungen der Dichtmittel bzw. Dichtlippen abgestimmt ist, ohne z.B. Rücksicht auf die Materialeigenschaften der Scheibe nehmen zu müssen. Dies kann zu einer verbesserten Haltbarkeit und/oder Funktionalität der Finne führen. Zum anderen kann eine einfachere Wartung und/oder Austauschbarkeit der wenigstens einen Finne ermöglicht werden, falls diese z.B. verschleißen oder beschädigt werden sollte. Ein weiterer Vorteil der separaten Ausbildung der Finne ist die Möglichkeit, die Finne, beispielsweise in/an den Schienengleiter (z.B. Mitnehmer) des Fensterhebers zu integrieren, wodurch die Montage vereinfacht und die Anzahl der benötigten Bauteile reduziert wird. Dies kann zu einer Kostensenkung und einer Verringerung des Gewichts der gesamten Vorrichtung führen.

Die wenigstens eine Eingriffsstruktur, insbesondere die wenigstens eine Finne, kann eingerichtet und/oder ausgebildet sein, den Dichtbereich bzw. Dichtkanal zumindest teilweise zu öffnen, insbesondere freizulegen, vorzugsweise auseinanderzudrücken und/oder aufzuweiten. Der Dichtbereich, der beispielsweise durch Dichtmittel bzw. Dichtlippen (diese Begriffe können austauschbar verwendet werden) blockiert, versperrt, unzugänglich und/oder verschlossen ist, kann beim Eintauchen der Scheibe einen erhöhten Widerstand bzw. Kraftaufwand darstellen. Durch die Eingriffsstruktur kann dieser Widerstand bzw. dieser Kraftaufwand reduziert werden, indem die Eingriffsstruktur die Dichtmittel auseinander drückt und der Dichtbereich (wenigstens teilweise) geöffnet, freigegeben und/oder freigelegt wird, bevor die Scheibe eintaucht. Dies führt zu einer Reduzierung der Belastung auf die Dichtmittel und kann die Kräfte verringern, die dort wirken. Zudem kann die Dichtwirkung verbessert werden, da die Dichtmittel nach dem Austreten der Finne bzw. der Scheibe wieder in ihre ursprüngliche Position zurückkehren und somit eine effektive Abdichtung gewährleisten. Die wenigstens eine Eingriffsstruktur bzw. die wenigstens eine Finne können dazu beitragen, dass die Scheibe sanft und/oder ohne übermäßigen Widerstand in den Dichtbereich gleitet bzw. schiebt. Dies erleichtert nicht nur das Einführen der Scheibe, sondern reduziert auch den Verschleiß an der Dichtung.

Die wenigstens eine Eingriffsstruktur, insbesondere die wenigstens eine Finne, kann plattenartig ausgebildet sein. Die wenigstens eine Eingriffsstruktur, insbesondere die wenigstens eine Finne, kann im Wesentlichen eben bzw. plan oder planar, flächig und/oder im Wesentlichen flach ausgebildet sein. Mit anderen Worten, die wenigstens eine Eingriffsstruktur, insbesondere die wenigstens eine Finne, kann als ein in einer Ebene ausgedehntes bzw. ausgebreitetes Bauteil ausgebildet sein. Diese plattenartige Gestaltung der wenigstens einen Eingriffsstruktur, insbesondere der wenigstens einen Finne, kann eine gleichmäßige(re) Verteilung der Kräfte auf die Dichtmittel des Dichtbereichs ermöglichen, was zu einer Reduzierung der Belastung auf die Dichtung führen kann. Dadurch kann der Kraftaufwand, der zum Absenken und/oder Hochfahren der Scheibe erforderlich ist, verringert werden, was wiederum die Lebensdauer der Dichtungen verlängert. Die plattenartige Finne kann zudem so gestaltet sein, dass sie eine optimale Geometrie aufweist, um die Dichtlippen effektiv zu öffnen und/oder den Dichtbereich zu weiten, bevor die Scheibe z.B. in diesen eintaucht. Dies erleichtert das Einführen der Scheibe in den Dichtbereich erheblich und sorgt für eine reibungslose Bewegung der Scheibe.

Die wenigstens eine Eingriffsstruktur, insbesondere die wenigstens eine Finne, und die Scheibe, können insbesondere in einem an der Scheibe montierten Zustand, also z.B. wenn die Eingriffsstruktur bzw. die Finne an der Scheibe angeordnet und/oder befestigt ist, in einer gemeinsamen Ebene liegen. Alternativ oder zusätzlich kann die wenigstens eine Eingriffsstruktur, insbesondere die wenigstens eine Finne, als Erweiterung, z.B. als Verlängerung, der Scheibe ausgebildet sein. Mit anderen Worten, die Eingriffsstruktur bzw. die Finne und die Scheibe können so konzipiert sein, dass sie in derselben Ebene liegen und/oder die Finne als eine Verlängerung der Scheibe betrachtet werden kann. Durch die gemeinsame Ebene kann sichergestellt werden, dass die Eingriffsstruktur bzw. die Finne und die Scheibe, insbesondere ohne zusätzliche mechanische Komplexität, zusammenarbeiten können, was die Herstellung, Funktionsweise und/oder Montage vereinfacht. Die Finne als Erweiterung der Scheibe kann dazu beitragen, dass der Dichtbereich des Sichtfensters oder des Rahmens effizient geöffnet wird, bevor die Scheibe eintaucht, was den Kraftaufwand beim Absenken der Scheibe erheblich reduziert. Dies führt zu einer geringeren Belastung der Dichtung und des Fensterhebersystems, was die Lebensdauer dieser Komponenten verlängert und die Wartungskosten senkt. Die Eingriffsstruktur bzw. Finne als Erweiterung der Scheibe kann zudem dafür sorgen eine gleichmäßige Verteilung der Kräfte entlang der Scheibenkante bereitzustellen, was die Gefahr von Spannungsrissen oder anderen strukturellen Schäden verringert.

Die wenigstens eine Eingriffsstruktur, insbesondere die wenigstens eine Finne, kann, insbesondere wenigstens abschnittsweise, eine variierende Dicke aufweisen. Die wenigstens eine Eingriffsstruktur, insbesondere die wenigstens eine Finne, kann eine Dicke aufweisen, die wenigstens abschnittsweise in Richtung des Dichtbereichs und/oder in Richtung einer Außenseite der Eingriffskontur bzw. Finne abnimmt bzw. sich verjüngt. Beispielsweise kann die Dicke allmählich, stetig und/oder kontinuierlich abnehmen, und/oder unter einem spezifischen Winkel, beispielsweise einem spitzen Winkel. Die wenigstens eine Eingriffsstruktur, insbesondere die wenigstens eine Finne, kann beispielsweise nach außen bzw. zu einer Außenseite und/oder in Richtung der Dichtkontur eine verjüngende bzw. zuspitzende Kante aufweisen und/oder spitz zulaufen, beispielsweise klingenartig und/oder messerartig. Die Gestaltung der Eingriffsstruktur bzw. Finne, kann dazu beitragen, die Interaktion bzw. den Eingriff zwischen der Scheibe und dem Dichtbereich zu optimieren. Die variierende Dicke der Finne kann einen graduellen Eingriff bzw. eine graduelle Anpassung an die Dichtmittel des Kanals ermöglichen, wodurch der Druck im Wesentlichen gleichmäßig verteilt werden kann und ein sanfteres Einführen der Scheibe ermöglicht wird. Dies kann den Kraftaufwand, der erforderlich ist, um die Scheibe in den Dichtbereich zu bewegen, weiter reduzieren und gleichzeitig die Belastung auf die Dichtungen und das Fensterhebersystem minimieren. Durch die abnehmende Dicke in Richtung des Dichtbereichs kann der Dichtbereich schrittweise bzw. allmählich geöffnet werden, was das Risiko von Beschädigungen an der Dichtung und der Scheibe verringert. Darüber hinaus trägt die variierende Dicke der Finne dazu bei, die Reibungskräfte zu reduzieren, was zu einer längeren Lebensdauer der beteiligten Komponenten führt. Durch die innovative Formgebung der Finne wird eine gleichmäßige Verteilung der Kräfte erreicht, was zu einer reibungsloseren und/oder leiseren Bedienung des Fensters führt. Dies ist besonders vorteilhaft für Nutzfahrzeuge, bei denen eine robuste und zuverlässige Fenstermechanik erforderlich ist.

Die wenigstens eine Eingriffsstruktur, insbesondere die wenigstens eine Finne, kann wenigstens teilweise eine asymmetrische Form, insbesondere Außenform, aufweisen. Alternativ oder zusätzlich kann die wenigstens eine Eingriffsstruktur, insbesondere die wenigstens eine Finne, wenigstens teilweise keilförmig ausgebildet sein. Die asymmetrische bzw. wenigstens teilweise/abschnittsweise keilförmige Form der Eingriffsstruktur, insbesondere der Finne, kann eine gezielte und/oder gleichmäßige Verteilung der Kräfte beim Einführen der Scheibe in den Dichtbereich fördern. Diese asymmetrische/keilförmige Gestaltung kann ferner dazu beitragen, dass die Dichtmittel des Dichtbereichs effektiver und/oder gleichmäßiger auseinander gedrückt werden, was den Kraftaufwand beim Einführen der Scheibe reduziert. Die asymmetrische bzw. keilförmige Ausbildung der Eingriffsstruktur unterstützt diesen Effekt zusätzlich, indem sie eine progressive Vergrößerung des Spalts zwischen den Dichtmitteln bewirkt. Dies führt zu einer schrittweisen bzw. kontrollierten Öffnung des Dichtbereichs, wodurch die Belastung auf die Dichtungen und das Fensterhebersystem weiter verringert wird. Die spezifische Formgebung der Eingriffsstruktur kann sicherstellen, dass die Scheibe auch bei wiederholtem Ein- und Ausfahren zuverlässig und/oder ohne erhöhten Verschleiß in den Dichtbereich eingeführt werden kann. Durch diese konstruktiven Maßnahmen wird nicht nur die Funktionalität verbessert, sondern auch der Komfort für den Benutzer erhöht, da das Ein- und Ausfahren der Scheibe mit weniger Kraftaufwand und geringerer Geräuschentwicklung verbunden ist.

Die wenigstens eine Eingriffsstruktur, insbesondere die wenigstens eine Finne, kann eine Eingriffskontur, insbesondere eine Eingriffskante, ausbilden. Die Eingriffskontur, insbesondere die Eingriffskante, kann wenigstens abschnittsweise bogenförmig und/oder wenigstens abschnittsweise gekrümmt verlaufen. Beispielsweise kann die wenigstens eine Eingriffskontur, insbesondere die wenigstens eine Eingriffskante in Bezug auf eine vertikale Achse oder Längsachse der Vorrichtung wenigstens abschnittsweise bogenförmig und/oder wenigstens abschnittsweise gekrümmt verlaufen. Auch schräge, geneigte und/oder gewinkelte Verläufe bzw. eine Kombination aus den vorherigen sind denkbar. Die bogenförmige und/oder gekrümmte Gestaltung der Eingriffskontur kann einen graduellen, stetigen, allmählichen und/oder stückweisen Eingriffe in die Dichtmittel und/oder eine gleichmäßige Verteilung der Kräfte ermöglichen, die auf die Dichtmittel wirken, wenn die Scheibe in den Dichtbereich eintaucht. Dies reduziert den Widerstand, den die Dichtmittel der absenkbaren Scheibe entgegensetzen, und erleichtert somit das Eintauchen der Scheibe. Die bogenförmige und/oder gekrümmte Eingriffskontur kann zudem dazu beitragen, die Dichtmittel schonend auseinanderzudrücken, was die Belastung auf die Dichtungen minimiert und deren Lebensdauer verlängert. Ein Vorteil dieser Gestaltung ist eine verbesserte Abdichtung, da die Dichtlippen nach dem Durchgang der Scheibe wieder in ihre ursprüngliche Position zurückkehren können, ohne dass sie übermäßig beansprucht werden. Darüber hinaus kann die bogenförmige und/oder gekrümmte Eingriffskontur die Geräuschentwicklung beim Absenken und Hochfahren der Scheibe reduzieren, da die Bewegungen sanfter und/oder gleichmäßiger verlaufen. Die bogenförmige und/oder gekrümmte Eingriffskontur kann auch eine bessere Anpassung an unterschiedliche Dichtungsprofile ermöglichen, wodurch die Vorrichtung vielseitiger einsetzbar ist. Durch die spezifische Gestaltung der Eingriffskontur wird zudem die Gefahr von Beschädigungen an der Scheibe und/oder den Dichtungen verringert.

Alternativ oder zusätzlich kann die Eingriffskontur, insbesondere die Eingriffskante, abschnittsweise schräg und/oder geneigt und/oder gewinkelt in Bezug auf eine Längsachse der Vorrichtung bzw. eine vertikale Achse der Vorrichtung und/oder eine Kontur des Dichtbereichs verlaufen. Der Vorteil dieser schrägen bzw. geneigten bzw. gewinkelten Eingriffskontur kann darin liegen, dass sie das Einführen der Scheibe in den Dichtbereich erleichtert, indem sie die Dichtlippen des Kanals aufweitet, bevor die Scheibe z.B. vollständig eintaucht. Dies reduziert den Kraftaufwand, der erforderlich ist, um die Scheibe in den Dichtbereich zu bewegen, und minimiert gleichzeitig den Verschleiß der Dichtungen. Eine schräge bzw. geneigte Eingriffskante kann auch dazu beitragen, die Belastung auf die Dichtung und das Fensterhebersystem zu verringern, da die Scheibe mit weniger Widerstand in den Dichtbereich eintaucht. Diese Gestaltung der Eingriffsstruktur kann in verschiedenen Winkeln, Orientierungen und/oder Ausrichtungen erfolgen, um optimal an die spezifischen Anforderungen des Fahrzeugs und des Dichtbereichs angepasst zu sein. Durch die Integration dieser schrägen Eingriffskontur kann eine effizientere und/oder schonendere Bewegung der Scheibe ermöglicht werden, was die Lebensdauer der Dichtungen und des gesamten Fensterhebersystems verlängert.

Die Vorrichtung (bzw. die Eingriffsstruktur) kann ein, insbesondere separates/individuelles, Bauteil sein, dass, z.B. direkt, an der, insbesondere absenkbaren, Scheibe, beispielsweise an wenigstens einer Stelle bzw. wenigstens einer Seite, vorzugsweise einer Unterkante der, insbesondere absenkbaren, Scheibe anbringbar bzw. angebracht und/oder befestigbar bzw. befestigt ist, beispielsweise durch Stecken, Kleben, Klipsen oder dergleichen. Die Vorrichtung kann z.B. auch an einem Scheibenhalter angebracht und/oder befestigt sein, dies ist jedoch nicht zwingend. Der Scheibenhalter kann z.B. an wenigstens einer Seite (Scheibenseite) der, insbesondere absenkbaren, Scheibe angebracht und/oder befestigt sein. Die Vorrichtung kann ein Halteelement, insbesondere einen Scheibenhalter, zur Aufnahme der absenkbaren Scheibe umfassen. Das Halteelement kann, in einer beispielhaften jedoch nicht einschränkenden Ausgestaltung einen im Wesentlichen Y-förmigen Querschnitt aufweisen, beispielsweise zur Aufnahme der, insbesondere absenkbaren, Scheibe. Das Halteelement bzw. der Scheibenhalter kann allerdings auch einen anderen Querschnitt aufweisen und an wenigstens einer Seite der, insbesondere absenkbaren, Scheibe angebracht und/oder befestigt sein.

Die wenigstens eine Eingriffsstruktur, insbesondere die wenigstens eine Finne, kann eine geringere Dicke aufweisen als das Halteelement. Die wenigstens eine Eingriffsstruktur, insbesondere die wenigstens eine Finne, kann seitlich bzw. an einer Seite des Halteelements befestigt und/oder befestigbar sein, beispielsweise an einem vertikalen Abschnitt der Y-Form und/oder unterhalb der Scheibe. Das Halteelement kann ein Scheibenhalter sein bzw. als Scheibenhalter dienen und eine stabile bzw. sichere Aufnahme der absenkbaren Scheibe ermöglichen, z.B. diese umgreifen, umschließen und/oder umgeben, z.B. wenigstens teilweise. Der beispielhafte bzw. optionale Y-förmige Querschnitt kann auf die Abmessungen, bzw. eine Dicke, der Scheibe abgestimmt sein. Durch die geringere Dicke der Eingriffsstruktur wird sichergestellt, dass die Dichtmittel nur minimal beansprucht werden, was zu einer längeren Lebensdauer der Dichtungen führt. Darüber hinaus trägt die spezifische Gestaltung der Eingriffsstruktur dazu bei, dass die Scheibe reibungslos und ohne nennenswerten bzw. deutlich geringeren Widerstand in den Dichtbereich gleiten bzw. eintauchen kann. Eine dünnere Ausgestaltung der Eingriffsstruktur bzw. der Finne spart zudem Material und/oder Kosten und/oder erleichtert das Einführen der absenkbaren Scheibe in den Dichtbereich.

Die Vorrichtung kann einen Gleiter, insbesondere einen Schienengleiter, umfassen, der als Mitnehmer eines Fensterhebers fungiert. Die wenigstens eine Eingriffsstruktur, insbesondere die wenigstens eine Finne, kann an dem Gleiter bzw. dem Schienengleiter, insbesondere an einem Abschnitt davon, befestigbar und/oder befestigt sein. Der Gleiter, insbesondere der Schienengleiter, kann dazu dienen, die Bewegung der Scheibe zu unterstützen, zu führen, zu regeln und/oder zu steuern, indem er z.B. entlang einer Schiene verläuft. Die Befestigung der Eingriffsstruktur an diesem Gleiter kann eine präzise und/oder stabile Positionierung bzw. Ausrichtung der Finne ermöglichen, was die Funktionalität der Vorrichtung verbessert. Die Finne kann so gestaltet sein, dass sie beim Absenken und/oder Hochfahren der Scheibe in den Dichtbereich des Sichtfensters bzw. des Rahmens eingreifen kann. Dies kann zu einer Aufweitung der Dichtlippen führen, bevor die Scheibe in den Dichtbereich eintaucht, wodurch der Kraftaufwand für das Eintauchen der Scheibe erheblich reduziert wird. Der Vorteil dieser Konstruktion liegt in der Reduzierung der Belastung auf die Dichtung und/oder das Fensterhebersystem. Durch die Integration der Finne in den Schienengleiter kann eine gleichmäßige und/oder kontrollierte Bewegung der Scheibe gewährleistet werden.

Die wenigstens eine Eingriffsstruktur, insbesondere die wenigstens eine Finne, kann integral, insbesondere einstückig, z.B. aus einem Stück, mit dem Halteelement oder dem Gleiter, insbesondere dem Schienengleiter, verbunden sein. Diese Ausgestaltung kann eine erhöhte strukturelle Integrität und/oder Stabilität ermöglichen, da keine separaten Befestigungselemente, Schnittstellen und/oder Verbindungen erforderlich sind, die potenziell Schwachstellen darstellen könnten. Dies führt zu einer robusteren und langlebigeren Konstruktion, die weniger anfällig für Verschleiß oder Beschädigungen ist. Darüber hinaus vereinfacht die integrale Gestaltung den Herstellungsprozess, da weniger Einzelteile produziert und montiert werden müssen, was zu einer Reduzierung der Produktionskosten und einer Steigerung der Effizienz führt. Die einstückige Verbindung der Finne mit dem Halteelement oder dem Gleiter kann zudem sicherstellen, dass die Finne stets in der optimalen Position bleibt, um ihre Funktion effektiv zu erfüllen, ohne dass z.B. eine Nachjustierung erforderlich ist

Die wenigstens eine Eingriffsstruktur, insbesondere die wenigstens eine Finne, kann, insbesondere in einem an der Scheibe montierten Zustand,
bei einem Absenken der Scheibe, insbesondere räumlich, vor der Scheibe in den Dichtbereich eintreten, insbesondere um den Dichtbereich für die Scheibe wenigstens teilweise bzw. abschnittsweise freizulegen, zu öffnen und/oder aufzuweiten, und/oder
bei einem Hochfahren der Scheibe, insbesondere räumlich, nach der Scheibe aus dem Dichtbereich austreten, ausfahren und/oder diesen verlassen, insbesondere um den Dichtbereich zu schließen.

Durch das vorzeitige Einführen der Eingriffsstruktur bzw. Finne in den Dichtbereich, insbesondere beim Absenken der Scheibe, kann der Dichtbereich stetig bzw. graduell geöffnet werden, was den Widerstand verringert, den die Scheibe beim Eintauchen in den Dichtbereich erfährt. Dies führt zu einer Reduzierung der Kräfte. Durch das nachträgliche Austreten der Eingriffsstruktur bzw. der Finne aus dem Dichtbereich, insbesondere beim Hochfahren der Scheibe, kann der Dichtbereich stetig bzw. graduell geschlossen werden, was eine zuverlässige Abdichtung gewährleistet und das Eindringen von Wasser und Schmutz verhindert.

### KURZBESCHREIBUNG DER ZEICHNUNGEN

Ausführungsbeispiele der Erfindung werden nun unter Bezugnahme auf die beigefügten Zeichnungen beschrieben. Damit die oben genannten Merkmale der vorliegenden Offenbarung im Detail verstanden werden können, kann eine detailliertere Beschreibung der Offenbarung, die oben kurz zusammengefasst wurde, durch Bezugnahme auf Ausführungsbeispiele erhalten werden. Die begleitenden Zeichnungen beziehen sich auf Ausführungsformen der Offenbarung und werden im Folgenden beschrieben:
- FIG. 1: zeigt eine erfindungsgemäße Vorrichtung an einer, insbesondere absenkbaren, Scheibe, mit wenigstens einer Eingriffsstruktur;
- FIG. 2: zeigt die erfindungsgemäße Vorrichtung aus Fig. 1, bevor diese in einen Dichtbereich des Sichtfensters eingetreten ist;
- FIG. 3: zeigt die erfindungsgemäße Vorrichtung aus Fig. 1, während des Eintretens in den Dichtbereich des Sichtfensters aus Fig. 2;
- FIG. 4: zeigt eine Seitenansicht der erfindungsgemäßen Vorrichtung aus Fig. 1 während des Eintretens in den Dichtbereich, z.B. wie in Fig. 3; und
- FIG. 5: zeigt eine perspektivische Ansicht der erfindungsgemäßen Vorrichtung aus Fig. 1 während des Eintretens in den Dichtbereich, z.B. wie in Fig. 3.

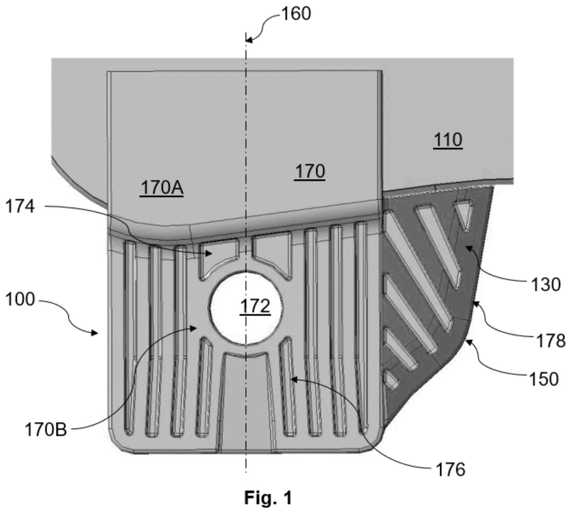

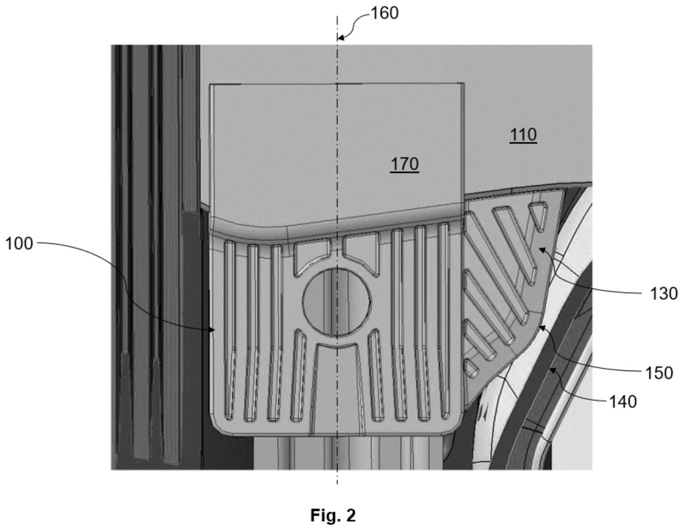

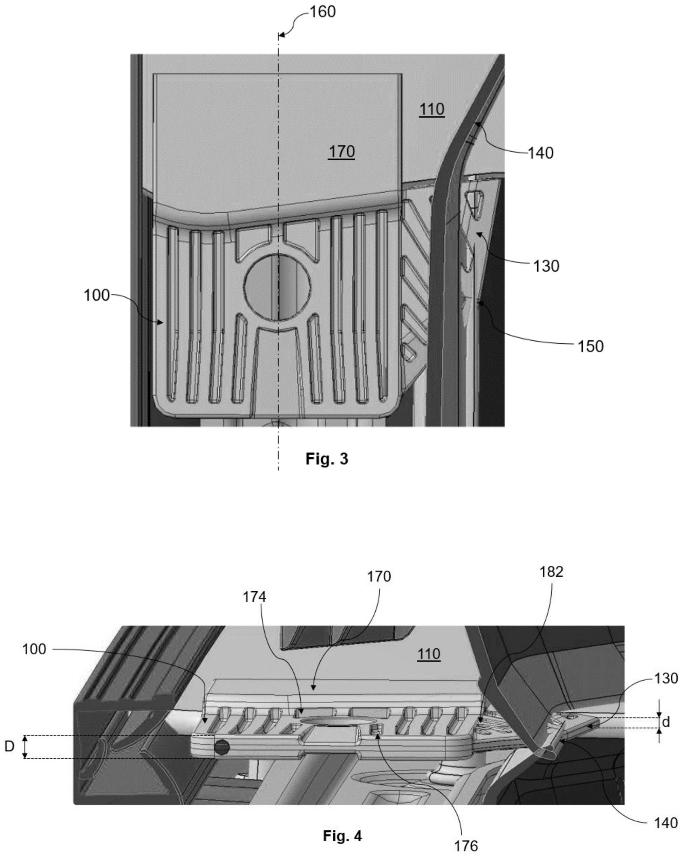

Fig. 1 zeigt eine schematische Darstellung einer erfindungsgemäßen Vorrichtung 100 zum Erleichtern des Einführens an einer absenkbaren Scheibe 110 mit wenigstens einer Eingriffsstruktur 130, insbesondere wenigstens einer Finne 130. Die Vorrichtung 100 kann einen Scheibenhalter 170 umfassen, der an der Scheibe 110 ein-/angreift, anliegt und/oder daran befestigt bzw. angebracht ist. Die wenigstens eine Eingriffsstruktur 130 kann, wie in Fig. 1 dargestellt, eine spezifische Form und/oder Kontur ausbilden, beispielsweise mit einem charakteristischen Verlauf. Die Eingriffsstruktur 130 ausgebildet sein, das Einführen der Scheibe zu erleichtern und/oder insbesondere bei einer Bewegung der, insbesondere absenkbaren, Scheibe 110, insbesondere bei einem Absenken und/oder Hochfahren der Scheibe 110, in den Dichtbereich bzw. Dichtkanal 140 (vgl. z.B. Fig. 2 bzw. 3) des Sichtfensters oder des Rahmens einzugreifen, einzufahren, einzutauchen und/oder einzuschieben. Beispielsweise kann die Eingriffsstruktur 130 bzw. die Finne 130 so gestaltet sein, dass sie in den Dichtbereich 140 eingreift und diesen wenigstens teilweise öffnet, um z.B. einen Widerstand zu reduzieren, der beispielsweise durch die Dichtlippen entsteht und/oder Platz für die Scheibe 110 schaffen, insbesondere um das Einführen der Scheibe 110 zu erleichtern. Die vertikale Achse bzw. Längsachse der Vorrichtung 100 kann durch die Achse 160 dargestellt sein.

Die wenigstens eine Finne 130 aus Fig. 1 kann, z.B. durch ihre Form, Abmessungen, (Oberflächen-)Struktur, Material und/oder Positionierung, die Dichtlippen auseinanderdrücken bzw. öffnen, und somit das Einführen, Einschieben, Einstecken und/oder Einlegen der Scheibe 110 erleichtern bzw. ermöglichen. Die wenigstens eine Finne 130 kann in verschiedenen Formen, Abmessungen und/oder Größen gefertigt werden, um unterschiedlichen Dichtungsgeometrien und/oder Einbausituationen gerecht zu werden.

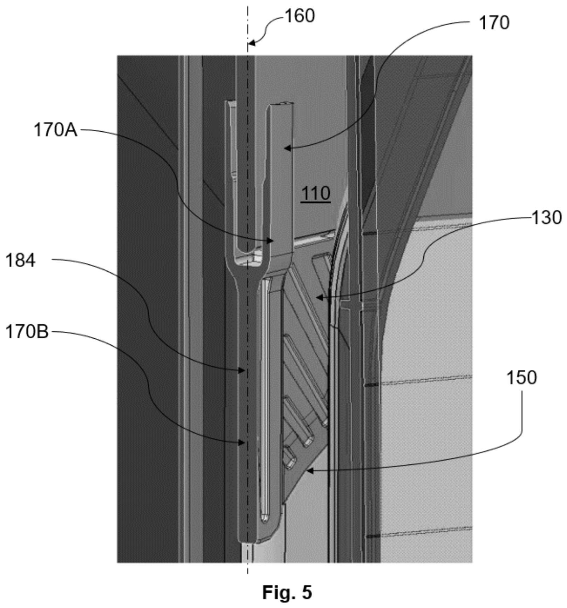

Wie in Fig. 1 erkennbar, kann das Haltelement 170 in verschiedene, z.B. zwei, Bereiche, Abschnitte und/oder Regionen unterteilt werden. Ein erster Bereich 170A kann z.B. für die Aufnahme der Scheibe 110 dienen und/oder, wie am besten in Fig. 5 erkennbar, einen oberen Teil, z.B. entlang Achse 160, des beispielhaften Y-förmigen Querschnitts darstellen. Ein zweiter Bereich 170B kann beispielsweise zur Ausbildung/Befestigung der wenigstens einen Eingriffsstruktur 130 dienen und, wie am besten in Fig. 5 erkennbar, einen unteren, bzw. vertikalen Teil, z.B. entlang Achse 160, des beispielhaften Y-förmigen Querschnitts aus Fig. 5 darstellen. Beispielsweise kann die wenigstens eine Eingriffsstruktur 130 seitlich/lateral an dem Haltelement 170 bzw. an dem zweiten Bereich 170B angeordnet sein. Wie ferner in Fig. 1 ersichtlich, kann die wenigstens eine Eingriffsstruktur 130 bzw. Finne 130 und/oder der zweite Bereich 170B wenigstens eine Vertiefung, insbesondere eine, vorzugsweise längliche, Nut aufweisen, die sich wenigstens teilweise über wenigstens eine Oberfläche der wenigstens einen Finne erstreckt. Insbesondere kann die wenigstens eine Eingriffsstruktur 130 bzw. Finne 130 und/oder der zweite Bereich 170B eine Mehrzahl von Vertiefungen, insbesondere eine Mehrzahl von, vorzugsweise länglichen, Nuten, aufweisen, die beispielsweise im Wesentlichen parallel zueinander angeordnet und/oder gleichmäßig voneinander beabstandet sind. Die wenigstens eine Vertiefung bzw. die Mehrzahl von Vertiefungen können auf wenigstens einer, vorzugsweise beiden, insbesondere gegenüberliegenden, Oberflächen der wenigstens einen Eingriffsstruktur 130 bzw. Finne 130 und/oder des zweite Bereichs 170B bereitgestellt sein. Schräge Verläufe, wie in Fig. 1 dargestellt oder geradlinige Verläufe, z.B. entlang/parallel zu der Achse 160 sind möglich. Eine Breite der Vertiefungen und/oder der Verläufe kann variieren, z.B. kann eine erste Vertiefung 174 eine erste Breite und/oder einen ersten Verlauf, eine erste Form bzw. eine erste Ausrichtung aufweisen, die sich von einer zweiten Breite und/oder einem zweiten Verlauf, einer zweiten Form bzw. einer zweiten Ausrichtung einer zweiten Vertiefung 176 unterscheidet. Diese Vertiefungen können dazu beitragen Material bzw. Gewicht und damit Kosten zu sparen und/oder den Fertigungs- bzw. Herstellungsprozess zu erleichtern. Die Vertiefung(en) können, wie in Fig. 4 dargestellt, nicht durchgängig sein, z.B. eine Tiefe aufweisen, die geringer ist als eine Dicke des zweiten Bereichs 170B und/oder der Eingriffsstruktur 130, oder durchgängig sein. Die Öffnung 172 kann ebenfalls dazu dienen, Material bzw. Gewicht und damit Kosten zu sparen und/oder den Fertigungs- bzw. Herstellungsprozess zu erleichtern, wobei die Öffnung 172 jedoch zusätzlich auch zum Greifen/Halten und/oder Montieren der Vorrichtung 100, z.B. an der Scheibe 110 dienen kann. Es sei anzumerken, dass die Vertiefungen und/oder die Öffnung 172 lediglich optional sind.

Die wenigstens eine Eingriffsstruktur 130, insbesondere die wenigstens eine Finne 130, kann, wie in Fig. 1 dargestellt, im Wesentlichen plattenartig ausgebildet sein. Die wenigstens eine Eingriffsstruktur 130, insbesondere die wenigstens eine Finne 130, kann beispielsweise im Wesentlichen eben bzw. plan oder planar, flächig und/oder im Wesentlichen flach ausgebildet sein. Die wenigstens eine Eingriffsstruktur 130, insbesondere die wenigstens eine Finne 130, und die Scheibe 110, können insbesondere in einem an der Scheibe 110 montierten Zustand, wie in Fig. 1 dargestellt, in einer gemeinsamen Ebene liegen, welche z.B. durch die Scheibe 110 definiert werden kann. Alternativ oder zusätzlich kann, wie in Fig. 1 erkennbar, die wenigstens eine Eingriffsstruktur 130, insbesondere die wenigstens eine Finne 130, als Erweiterung, z.B. als Verlängerung, der Scheibe 110 ausgebildet sein, beispielsweise in Richtung der Achse 160 nach unten.

Die wenigstens eine Eingriffsstruktur 130, insbesondere die wenigstens eine Finne 130, kann, insbesondere wenigstens abschnittsweise, eine variierende Dicke aufweisen. Die wenigstens eine Eingriffsstruktur 130, insbesondere die wenigstens eine Finne 130, kann eine Dicke aufweisen, die wenigstens abschnittsweise in Richtung des Dichtbereichs 140 (vgl. z.B. Fig. 2-3) und/oder in Richtung einer Außenseite 178 der Eingriffskontur 150 abnimmt bzw. sich verjüngt und/oder, beispielsweise klingenartig und/oder messerartig, zuspitzt. Beispielsweise kann die Dicke allmählich, graduell, stetig und/oder kontinuierlich abnehmen. Die wenigstens eine Eingriffsstruktur 130, insbesondere die wenigstens eine Finne 130, kann beispielsweise nach außen bzw. zu einer Außenseite 178 der Finne 130 und/oder in Richtung der Dichtkontur 140 eine verjüngende bzw. zuspitzende Kante aufweisen und/oder spitz zulaufen, beispielsweise klingenartig und/oder messerartig.

Die wenigstens eine Eingriffsstruktur 130, insbesondere die wenigstens eine Finne 130, kann wenigstens teilweise eine asymmetrische Form, insbesondere Außenform, aufweisen, wie in Fig. 1 ersichtlich. Alternativ oder zusätzlich kann die wenigstens eine Eingriffsstruktur 130, insbesondere die wenigstens eine Finne 130, wenigstens teilweise keilförmig ausgebildet sein. Die asymmetrische bzw. keilförmige Form der Eingriffsstruktur, insbesondere der Finne, kann eine gezielte und/oder gleichmäßige Verteilung der Kräfte beim Einführen der Scheibe in den Dichtbereich fördern.

Die wenigstens eine Eingriffsstruktur 130, insbesondere die wenigstens eine Finne 130, kann eine Eingriffskontur 150, insbesondere eine Eingriffskante 150, ausbilden, wie in Fig. 1 ersichtlich. Die Eingriffskontur 150, insbesondere die Eingriffskante 150, kann wenigstens abschnittsweise bogenförmig und/oder wenigstens abschnittsweise gekrümmt verlaufen. Beispielsweise kann die wenigstens eine Eingriffskontur 150, insbesondere die wenigstens eine Eingriffskante 150, in Bezug auf eine vertikale Achse 160 oder Längsachse 160 der Vorrichtung 100 wenigstens abschnittsweise bogenförmig und/oder wenigstens abschnittsweise gekrümmt verlaufen. Auch schräge, geneigte und/oder gewinkelte Verläufe bzw. eine Kombination aus den vorherigen, z.B. in Bezug auf die Achse 160, sind denkbar. Die bogenförmige und/oder gekrümmte Gestaltung der Eingriffskontur 150 kann einen graduellen, stetigen, allmählichen und/oder stückweisen Eingriffe in die Dichtmittel und/oder eine gleichmäßige Verteilung der Kräfte ermöglichen, die auf die Dichtmittel wirken, wenn die Scheibe in den Dichtbereich eintaucht.

Wie in Fig. 1 gezeigt, kann die wenigstens eine Eingriffsstruktur 130, insbesondere die wenigstens eine Finne 130, integral, insbesondere einstückig, z.B. aus einem Stück, mit dem Halteelement 170 oder dem Gleiter (nicht gezeigt), insbesondere dem Schienengleiter, verbunden sein.

Fig. 2 zeigt die erfindungsgemäße Vorrichtung 100 aus Fig. 1 bevor diese in einen Dichtbereich 140 des Sichtfensters eingetreten bzw. eingetaucht ist und Fig. 3 zeigt die erfindungsgemäße Vorrichtung 100 während des Eintauchens. Die Eingriffsstruktur 130 kann (z.B. räumlich) vor der Scheibe 110 in den Dichtbereich 140 eintreten und diesen wenigstens teilweise öffnen (vgl. z.B. Fig. 3) bzw. aufweiten, bevor die Scheibe 110 in den Kanal eintaucht, um z.B. den Widerstand beim Eintauchen der Scheibe 110 bzw. für die Scheibe 110 zu reduzieren. Die Eingriffsstruktur 130 ist in der dargestellten Ausführungsform z.B. plattenartig ausgebildet und/oder kann eine variierende Dicke aufweisen, die in Richtung des Dichtbereichs 140 abnimmt, sich also z.B. verjüngt. Die Kontur 150 der Eingriffsstruktur 130 kann abschnittsweise bogenförmig und/oder schräg zur Längsachse 160 der Vorrichtung 100 verlaufen, was das Eindringen/Eintauchen in den Dichtbereich 140 erleichtern kann und/oder zu einem allmählichen, stetigen und/oder graduellen Eingriff mit verminderter Reibung bzw. Beanspruchung führen kann. Bei einem Absenken der Scheibe 110 (vgl. z.B. Fig. 2-3) kann die Eingriffsstruktur 130 (z.B. räumlich) vor der Scheibe 110 in den Dichtbereich 140 eintreten, um diesen für die Scheibe 110 freilegen, z.B. wenigstens teilweise. Beim Hochfahren der Scheibe 110 kann die Eingriffsstruktur 130 (z.B. räumlich) nach der Scheibe aus dem Dichtbereich 140 austreten, um diesen wieder zu verschließen, z.B. im Wesentlichen vollständig. Die dargestellte Vorrichtung 100 reduziert somit die Belastung auf die Dichtung und die Kräfte auf das Fensterheber-System, indem sie den Dichtbereich 140 öffnet, bevor die Scheibe 110 eintaucht. Dies erleichtert das Einführen der Scheibe 110 in den Dichtbereich 140 und reduziert den Kraftaufwand, der erforderlich ist, um die Scheibe 110 in den Dichtbereich 140 zu bewegen.

Fig. 4 zeigt eine seitliche Ansicht der Vorrichtung 100 aus Fig. 1, wobei die Finne 130 in den Dichtbereich 140 eintaucht. Wie erkennbar, kann die wenigstens eine Eingriffsstruktur 130, insbesondere die wenigstens eine Finne 130, eine geringere Dicke d aufweisen als das Halteelement 170, also Dicke d aufweisen, die geringer bzw. kleiner ist als ein Dicke D des Halteelements 170. Die wenigstens eine Eingriffsstruktur 130, insbesondere die wenigstens eine Finne 130, kann seitlich bzw. an einer Seite 182 des Halteelements 170, z.B. des zweiten Bereichs 170B (vgl. Fig. 1) befestigt und/oder befestigbar sein, beispielsweise an einem vertikalen Abschnitt 184 der Y-Form bzw. des Y-förmigen Querschnitts (vgl. Fig. 5) und/oder unterhalb der Scheibe 110. Das Halteelement 170 kann ein Scheibenhalter sein bzw. als Scheibenhalter dienen und eine stabile bzw. sichere Aufnahme der absenkbaren Scheibe 110 ermöglichen. Der Y-förmige Querschnitt (vgl. z.B. Fig. 5) kann auf die Abmessungen, bzw. eine Dicke, der Scheibe 110 abgestimmt sein. Es sei anzumerken, dass der Scheibenhalter auch z.B. an wenigstens einer Stelle und/oder Seite (Scheibenseite) der, insbesondere absenkbaren, Scheibe angebracht und/oder befestigt sein kann, beispielsweise ohne entsprechendes Halteelement, z.B. an einer Kante, vorzugsweise einer Unterkante. Ferner ist die Ausgestaltung mit einem im Wesentlichen Y-förmigen Querschnitt, beispielsweise zur Aufnahme der, insbesondere absenkbaren, Scheibe, lediglich optional bzw. bevorzugt, insbesondere beispielhaft jedoch nicht einschränkend. Das Halteelement bzw. der Scheibenhalter kann z.B. auch einen anderen Querschnitt aufweisen und an wenigstens einer Seite der, insbesondere absenkbaren, Scheibe angebracht und/oder befestigt sein. Durch die geringere Dicke d der Eingriffsstruktur 130 wird sichergestellt, dass die Dichtmittel nur minimal beansprucht werden, was zu einer längeren Lebensdauer der Dichtungen führt. Darüber hinaus trägt die spezifische Gestaltung der Eingriffsstruktur 130 dazu bei, dass die Scheibe 110 reibungslos und im Wesentlichen ohne nennenswerten Widerstand in den Dichtbereich 140 gleiten kann. Eine dünnere Ausgestaltung der Eingriffsstruktur 130 bzw. der Finne 130 spart zudem Material/Kosten und/oder erleichtert das Einführen der absenkbaren Scheibe 110 in den Dichtbereich 140.

Fig. 5 zeigt eine perspektivische Ansicht der erfindungsgemäßen Vorrichtung 100 aus Fig. 1 während des Eintretens in den Dichtbereich 140. In Fig. 5 ist der (optionale) Y-förmige Querschnitt der Vorrichtung 100 bzw. des Halteelements 170 erkennbar. Der erste Bereich 170A des Haltelements 170 kann z.B. verzweigt sein, insbesondere gabelförmig ausgebildet sein, z.B. zur Aufnahme der Scheibe 110. Der zweite Bereich 170B kann z.B. im Wesentlichen länglich, geradlinig und/oder vertikal ausgebildet sein, z.B. entlang der Achse 160, insbesondere einen vertikalen Abschnitt 184 definieren. Das Halteelement 170 kann also beispielhaft ein Scheibenhalter sein bzw. beispielhaft als Scheibenhalter dienen und eine stabile bzw. sichere Aufnahme der absenkbaren Scheibe 110 ermöglichen. Der optionale Y-förmige Querschnitt kann auf die Abmessungen, bzw. eine Dicke, der Scheibe 110 abgestimmt sein, beispielsweise zu deren Aufnahme, Halterung, Stützung und/oder Befestigung.

Obwohl das Vorstehende auf Ausführungsformen der Offenbarung gerichtet ist, können andere und weitere Ausführungsformen der Offenbarung ohne Abweichung vom grundlegenden Umfang davon entwickelt werden, wobei der Umfang durch die nachfolgenden Ansprüche bestimmt wird.

### Bezugszeichenliste:

- 100: Vorrichtung
- 110: Scheibe
- 130: Eingriffsstruktur
- 140: Dichtbereich
- 150: Eingriffskontur
- 160: Längsachse
- 170: Haltelement
- 170A, 170B: Bereiche
- 172: Öffnung
- 174, 176: Vertiefung
- 178: Außenseite
- 182: Seite
- 184: vertikaler Abschnitt

## Patentansprüche

1. Vorrichtung (100) zum Erleichtern eines Einführens einer, insbesondere absenkbaren, Scheibe (110) in ein Sichtfenster, insbesondere ein Tiefsichtfenster, eines Fahrzeugs, insbesondere eines Nutzfahrzeugs, oder in einen Rahmen des Sichtfensters, umfassend:
wenigstens eine Eingriffsstruktur (130), insbesondere wenigstens eine Finne, die ausgebildet ist, bei einer Bewegung der, insbesondere absenkbaren, Scheibe (110), insbesondere bei einem Absenken und/oder Hochfahren der Scheibe (110), in einen Dichtbereich (140) des Sichtfensters oder des Rahmens einzugreifen.

2. Vorrichtung (100) nach Anspruch 1, wobei die wenigstens eine Eingriffsstruktur (130), insbesondere die wenigstens eine Finne, separat zu der, insbesondere absenkbaren, Scheibe (110) ausgebildet ist.

3. Vorrichtung (100) nach einem der vorherigen Ansprüche, wobei die wenigstens eine Eingriffsstruktur (130), insbesondere die wenigstens eine Finne, ausgebildet ist, den Dichtbereich (140), insbesondere für die Scheibe (110), wenigstens teilweise zu öffnen, insbesondere freizulegen, vorzugsweise auseinanderzudrücken und/oder aufzuweiten.

4. Vorrichtung (100) nach einem der vorherigen Ansprüche, wobei die wenigstens eine Eingriffsstruktur (130), insbesondere die wenigstens eine Finne, plattenartig ausgebildet ist.

5. Vorrichtung (100) nach einem der vorherigen Ansprüche, wobei die wenigstens eine Eingriffsstruktur (130), insbesondere die wenigstens eine Finne, und die Scheibe (110), insbesondere in einem an der Scheibe (110) montierten Zustand, in einer gemeinsamen Ebene liegen und/oder die wenigstens eine Eingriffsstruktur (130), insbesondere die wenigstens eine Finne, als Erweiterung der Scheibe (110) ausgebildet ist.

6. Vorrichtung (100) nach einem der vorherigen Ansprüche, wobei die wenigstens eine Eingriffsstruktur (130), insbesondere die wenigstens eine Finne, eine variierende Dicke aufweist, die wenigstens abschnittsweise insbesondere in Richtung des Dichtbereichs (140) abnimmt.

7. Vorrichtung (100) nach einem der vorherigen Ansprüche, wobei die wenigstens eine Eingriffsstruktur (130), insbesondere die wenigstens eine Finne, wenigstens teilweise eine asymmetrische Form aufweist und/oder die wenigstens eine Eingriffsstruktur (130), insbesondere die wenigstens eine Finne, wenigstens teilweise keilförmig ausgebildet ist.

8. Vorrichtung (100) nach einem der vorherigen Ansprüche, wobei die wenigstens eine Eingriffsstruktur (130), insbesondere die wenigstens eine Finne, eine Eingriffskontur (150), insbesondere eine Eingriffskante, ausbildet, die wenigstens abschnittsweise bogenförmig und/oder wenigstens abschnittsweise gekrümmt verläuft.

9. Vorrichtung (100) nach einem der vorherigen Ansprüche, wobei die wenigstens eine Eingriffsstruktur (130), insbesondere die wenigstens eine Finne, eine Eingriffskontur (150), insbesondere eine Eingriffskante, ausbildet, die wenigstens abschnittsweise schrä in Bezug auf
i) eine Längsachse (160) der Vorrichtung (100) und/oder
ii) eine Kontur des Dichtbereichs (140)
verläuft.

10. Vorrichtung (100) nach einem der vorherigen Ansprüche, wobei die Vorrichtung (100)
an wenigstens einer Stelle, insbesondere einer Kante, vorzugsweise einer Unterkante, der, insbesondere absenkbaren, Scheibe befestigbar und/oder befestigt ist, oder
wobei die Vorrichtung ein Halteelement (170), insbesondere einen Scheibenhalter, zur Aufnahme der absenkbaren Scheibe (110), umfasst, wobei insbesondere die wenigstens eine Eingriffsstruktur (130), insbesondere die wenigstens eine Finne, eine Dicke aufweist, die geringer ist als eine Dicke des Halteelements (170).

11. Vorrichtung (100) nach einem der vorherigen Ansprüche, wobei die Vorrichtung (100) einen Gleiter, insbesondere Schienengleiter, umfasst, der als Mitnehmer eines Fensterhebers fungiert, wobei die wenigstens eine Eingriffsstruktur (130), insbesondere die wenigstens eine Finne, an dem Gleiter befestigbar und/oder befestigt ist.

12. Vorrichtung (100) nach einem der vorherigen Ansprüche 10-11, wobei die wenigstens eine Eingriffsstruktur (130), insbesondere die wenigstens eine Finne, integral, insbesondere einstückig, mit dem Halteelement (170) oder dem Gleiter verbunden ist.

13. Vorrichtung (100) nach einem der vorherigen Ansprüche 10-11, wobei die wenigstens eine Eingriffsstruktur (130), insbesondere die wenigstens eine Finne, insbesondere in einem an der Scheibe (110) montierten Zustand,
bei einem Absenken der Scheibe (110), vor der Scheibe (110) in den Dichtbereich (140) eintritt, insbesondere um den Dichtbereich (140) für die Scheibe (120) wenigstens teilweise freizulegen, und/oder
bei einem Hochfahren der Scheibe (110), nach der Scheibe (110) aus dem Dichtbereich (140) austritt, insbesondere um den Dichtbereich (140) zu schließen.

14. Fenstersystem für ein Fahrzeug, insbesondere ein Nutzfahrzeug, umfassend:
eine Vorrichtung (100) nach einem oder mehreren der Ansprüche 1-13, und
wenigstens eine, insbesondere absenkbare, Scheibe (110) für ein Sichtfenster, insbesondere ein Tiefsichtfenster, des Fahrzeugs oder für einen Rahmen desselben, wobei die Vorrichtung (100) an der Scheibe (110) oder einem Scheibenhalter befestigbar und/oder befestigt ist.

15. Fahrzeug, insbesondere ein Nutzfahrzeug, das mit einer Vorrichtung (100) nach einem oder mehreren der Ansprüche 1-13 und/oder einem Fenstersystem nach Anspruch 14 ausgestattet ist.
